Europäisches Patentamt

European Patent Office

Office européen des brevets

(11) Veröffentlichungsnummer: **0 068 289**
**A1**

(12) **EUROPÄISCHE PATENTANMELDUNG**

(21) Anmeldenummer: 82105243.8

(22) Anmeldetag: 15.06.82

(51) Int. Cl.³: **G 05 B 13/02**

(30) Priorität: 16.06.81 PL 231711

(43) Veröffentlichungstag der Anmeldung: 05.01.83
Patentblatt 83/1

(84) Benannte Vertragsstaaten: **DE FR GB NL**

(71) Anmelder: **Resortowy Osrodek Badawczo-Rozwojowy Automatyzacji Procesow Chemicznych "CHEMOAUTOMATYKA", ul. Rydygiera Nr. 8, 01-793 Warzawa 1 (PL)**

(72) Erfinder: **Wiaderek, Lucjan, ul. Czarnowiejska 75-85 m. 19, Kraków (PL)**
Erfinder: **Pyzik, Andrzej, Petöfiego 2 m. 36, Warszawa (PL)**
Erfinder: **Mis, Jerzy, pl. Laglewnicki 6, Kraków (PL)**
Erfinder: **Dobija, Mieczyslaw, ul. Barbary 10/155, Kraków (PL)**

(74) Vertreter: **Ebbinghaus, Dieter et al, v. FÜNER, EBBINGHAUS, FINCK Patentanwälte European Patent Attorneys Mariahilfplatz 2 & 3, D-8000 München 90 (DE)**

(54) Verfahren und Anordnung zur Steuerung chemischer Prozesse.

㉗ Das Steuerverfahren beruht auf zyklisch aufeinander-folgenden Tätigkeiten, nämlich auf dem Einspeichern auf-einanderfolgender Beobachtungen der für den Prozeß we-sentlichen Größen in eine Beobachtungsmenge und auf dem Bestimmen der optimalen Steuergrößen als Werte, für welche die bestimmte Funktion den Extremwert erreicht.
Diese Funktion hat dieselbe Struktur für alle Prozesse.
Die Anordnung zur Durchführung des erfindungsge-mäßen Verfahrens enthält einen Optimalregler, im Ausfüh-rungsbeispiel einen Regler 10, der mit den den Prozeß wesentlich beeinflussenden Signalen der Größen verbun-den ist, und zwar mittels Leitungen 11, 12 und 13 zugeführ-ten Signalen. Der Regler ist mit den ausführenden Steuersi-gnalen über eine Leitung 14 verbunden. Die Steuergrößen sind unmittelbar mit den automatischen Reglern verbunden oder bilden die Kennziffer für den Prozeßoperator bei Hand-steuerung.

PATENTANWÄLTE

SCHIFF v. FÜNER STREHL SCHÜBEL-HOPF EBBINGHAUS FINCK

MARIAHILFPLATZ 2 & 3, MÜNCHEN 90
POSTADRESSE: POSTFACH 95 01 60, D-8000 MÜNCHEN 95

ALSO PROFESSIONAL REPRESENTATIVES
BEFORE THE EUROPEAN PATENT OFFICE

KARL LUDWIG SCHIFF (1964-1978)
DIPL. CHEM. DR. ALEXANDER v. FÜNER
DIPL. ING. PETER STREHL
DIPL. CHEM. DR. URSULA SCHÜBEL-HOPF
DIPL. ING. DIETER EBBINGHAUS
DR. ING. DIETER FINCK

TELEFON (089) 48 20 54
TELEX 5-23 565 AURO D
TELEGRAMME AUROMARCPAT MÜNCHEN

EPA-22617

15. Juni 1982

- 1 -

0068289

## VERFAHREN UND ANORDNUNG ZUR STEUERUNG CHEMISCHER PROZESSE

Die Erfindung betrifft ein Verfahren und eine Anordnung zur Steuerung chemischer Prozesse, welche zur Durchführung dieser Prozesse unter Bedingungen vorgesehen sind, bei welchen die Steuerungsqualitätskennziffer einen extremen Wert erreicht.

Das Verfahren und die Anordnung können auch zur Steuerung physikalischer und physikalisch-chemischer Prozesse angewandt werden.

Prozesse werden entweder mittels einzelner Herstellungsanlagen oder einem Unterabschnitt derselben durchgeführt, denen Rohstoffe, z.B. Reagentien und neutrale Medien zu- und von denen Produkte abgeführt werden. Im Falle von katalytischen Prozessen kann der Apparat einen Katalysator enthalten, oder der Katalysator kann zusammen mit den Reagentien eingeführt werden. Die Konstruktionen der Anlagen, insbesondere ihr Innenaufbau, entsprechen den Bedingungen zur Durchführung der Einzelprozesse, die in einer chemischen und/oder physikalischen Umwandlung bestehen.

Der Verlauf des Prozesses wird durch die Parameter der Rohstoffströme, z.B. Durchsatz, Zusammensetzungen, Temperaturen, Drücke und durch Bedingungen, unter welchen diese Prozesse innerhalb der Anlagen verlaufen, wie Temperaturen, Drücke, Durchsätze, Katalysatoraktivitäten u.dgl. bestimmt.

Als Qualitätskennziffer des Prozesses, die auch eine Steuerungskennziffer darstellt, können die Leistung, die Prozeßausbeute, die Produktqualität, der Gehalt an gewünschten oder unerwünschten Bestandteilen, Intensität der chemischen Reaktionen, Intensität der physikalischen Prozesse, Produktionskosten oder eine beliebige Funktion dieser Größen angenommen werden.

Den durch die Steuerungsqualitätskennziffer bestimmten Verlauf des Prozesses können alle oder manche Parameter der Rohstoffströme sowie alle oder manche Parameter der Bedingungen des Verlaufs des Prozesses in den Anlagen beeinflussen. Alle oder manche der oben genannten Größen sind steuerbar und deren Werte werden auf dem gegebenen Niveau gehalten oder nach einem bestimmten Algorithmus durch automatische Regelung oder durch Handbedienung gesteuert.

Manche der den Verlauf des Prozesses wesentlich beeinflussenden Größen können unsteuerbare Größen sein.

Die bisher bekannten Methoden der Extremalsteuerung der Prozesse sind folgende:

- Handsteuerung, wobei die Bedienungsperson die Steuerwerte aufgrund der Beobachtung des Verlaufes entsprechend der Prozeßanleitung betätigt,
- Steuerung unter Einsatz von Extremalregelgeräten,
- Steuerung unter Einsatz mathematischer Modelle.

- 3 -

Die Handsteuerung ist ungenau und weit vom Optimalpunkt entfernt. Extremalregler, z.B. gemäß der PL-PS 56267, deren Wesen auf der Aussendung von Probesignalen und auf der Untersuchung der Richtungsänderung der Qualitätskennziffer beruht, werden grundsätzlich dort angewandt, wo Prozeßstörsignale anwendbar sind, wenn das der Steuerungsqualitätskennziffer entsprechende Signal leicht erreichbar ist und die Steuerung einer geringen Anzahl von Steuergrößen ausreicht. Die Steuerung beim Einsatz eines mathematischen Modells des zu steuernden Prozesses, z.B. gemäß der PL-PS 88 355, verlangt kostenaufwendige Untersuchungen der Produktionsprozesse zur Bearbeitung des Modells sowie eine periodische Aktualisierung des Modells, wodurch das Modell an die mit der Zeit veränderliche Charakteristik der Prozesse angepaßt wird.

Der Erfindung liegt die Aufgabe zugrunde, ein Verfahren zur Prozeßsteuerung zu entwickeln, bei welchem für die Soll- oder Ist-Werte von unsteuerbaren Größen entsprechende Werte von steuerbaren Größen ermittelt werden, bei welchen die Steuerungsqualitätskennziffer einen extremen Wert erreicht, die Steuerung ohne Probestörungen des Prozesses erfolgt und die Änderungen der Charakteristik des Prozesses sofort und unmittelbar in den die Steuerung durchführenden Algorithmus eingeführt werden.

Das Wesen der Erfindung liegt in der Einspeicherung der nacheinanderfolgenden Beobachtungen der wesentlichen Größen des gesteuerten Prozesses in den Speicher der als Optimalregler bezeichneten Rechenmaschine, wobei die Häufigkeit der Beobachtungen in den Grenzen von 0,0001 bis 36000 s liegt. Die Menge der Beobachtungen hat die Form

$$Z = [(x_{1,1} \ldots\ldots x_{n,1}, Y_1), (x_{1,2} \ldots\ldots x_{n,2}, Y_2),$$

$$(x_{1,n} \ldots\ldots x_{n,m}, Y_m] ,$$

- 4 -

worin bedeuten:

x   Wert  X  einer kennzeichnenden Größe des Prozesses,

y   Wert  Y  der Steuerungsqualitätskennziffer,

n   Anzahl der Größen, die den Verlauf des Prozesses kennzeichnend beeinflussen,

i   Ordnungszahl der Beobachtung,

m   Anzahl von Beobachtungen in der Menge  Z.

Die Steuerungsqualitätskennziffer  Y  des gesteuerten Prozesses kann entweder eine unmittelbar gemessene oder eine
abgeleitete Größe sein, die aufgrund der Werte der Größen
$x_1 \ldots x_n$ berechnet wird.

Weiterhin werden folgende Tätigkeiten zyklisch ausgeführt:

- aufgrund der Menge der Beobachtungen  Z  werden optimale
Werte  $x_1 \ldots x_s$  der Steuerungsgrößen  $x_1 \ldots x_s$  ermittelt, so daß für diese Werte die Funktion (1) ihren Extremwert erreicht, wobei die Funktion (1) die folgende Form
annimmt:

$$y(x_1, \ldots, x_n) = \frac{\sum\limits_{i=1}^{m} y_i h_i}{\sum\limits_{i=1}^{m} h_i} \qquad \ldots\ldots\ldots (1)$$

worin bedeuten:

$$h_i = \exp\left\{ - \left[ \frac{(x_1 - x_{1,i})^2}{2\delta_1^2} + \ldots\ldots + \frac{(x_n - x_{n,i})^2}{2\delta_n^2} \right] \right\}$$

$\delta_1, \ldots, \delta_n$   Parameter des Algorithmus,

s   Anzahl der Steuergrößen, nicht größer als die Anzahl der
kennzeichnenden Größen des Prozesses,

- Realisierung der ermittelten optimalen Steuerungswerte $x_1 \ldots x_s$ in dem gesteuerten Prozeß durch die Bedienungsperson oder durch die Regler dieser Größen durch deren Übermittlung zur Bedienungsperson oder als Sollwerte der Regler der Größen $x_1 \ldots x_s$,

- Durchführung der folgenden Beobachtung der kennzeichnenden Größen des Prozesses sowie der Prozeßqualitätskennziffer und deren Einführung in die Menge Z anstelle der ältesten Beobachtung, sofern die laufende Beobachtung wesentlich von der letzten gespeicherten Beobachtung abweicht.

Die Steuerungsqualitätskennziffer, wenn nicht unmittelbar gemessen, kann als Größe des Wärmeeffektes einer endo- oder exothermen Reaktion betrachtet werden, wie auch als Verteilung der Werte der kennzeichnenden Größen des Prozesses längs des Herstellungsapparates oder längs der Fertigungsstraße.

Das Wesen der Anordnung zur Durchführung des beschriebenen optimalen Verfahrens zur Steuerung der Prozesse besteht darin, daß die die technologischen Prozesse, Meßfühler, Meßgeräte, Regelventile und Rechenmaschinen enthaltende Anordnung einen getrennten Speicherteil aufweist, welchem von den Meßfühlern ausgewählte Größen zugeführt werden.

Der getrennte Speicher weist eine Kapazität für nicht weniger als 15 Beobachtungen auf. Die Rechenmaschine besitzt eingegebene optimale Steuerungsgrößen für Regler, Regelventile und Anzeigegeräte.

Die Rechenmaschine bildet den grundlegenden Teil des Optimalreglers, führt Berechnungen mit hoher Genauigkeit aus und ist zu diesem Zweck mit einem Speicher und mit Registern versehen, deren Wortlänge mindestens 16 Bits beträgt.

Als Einsatzbeispiel der Erfindung wird nachstehend das Verfahren zur Steuerung der katalytischen Konversion des Kohlenmonoxids sowie die Anordnung zum Einsatz dieses Verfahrens beschrieben.

Die Konversion des Kohlenmonoxids mit Wasserdampf zu Kohlendioxid und Wasserstoff besteht in einem Umwandlungsprozeß, in welchem der Rohstoff, das u.a. Kohlenmonoxid mit Wasserdampf enthaltende Gas, durch einen zur Temperaturregelung des Gases bestimmten Wärmetauscher und dann durch Katalysatorschichten in einem als Konverter bezeichneten Reaktionsapparat strömt. Die Gastemperatur wird vor dem Eingang in den Konverter und hinter dem Ausgang aus dem Konverter gemessen, wobei gleichzeitig der Durchsatz des Gases durch den Konverter gemessen wird.

Der oben beschriebene Prozeß wird bei visueller Beobachtung und Handregelung oder automatischer Regelung des Durchsatzes und der Temperatur nach einem konstanten Soll-Wert geführt. Es wird keine kontinuierliche Regelung der Parameter des Prozesses je nach dem infolge verschiedener Prozeßstörungen veränderlichen Konversionsgrad des Kohlenmonoxids mit dem Wasserdampf geführt. Diese Störungen haben ihre Ursachen in den Herstellungsprozessen des zur Konversion bestimmten Gases, wobei vorwiegend die Zusammensetzung des Gases verändert wird. Zusätzlich bewirkt eine Änderung der Katalysatoraktivität eine Änderung des Konversionsgrades für die gegebenen Parameter des Prozesses. Die Temperaturverteilung längs des Gasweges durch den Katalysator hängt von den Parametern des Prozesses ab und beeinflußt den Konversionsgrad des Kohlenmonoxids.

Der Zweck des Einsatzes der Erfindung bei dem besprochenen Prozeß als Einsatzbeispiel besteht in einer solchen Steuerung der Konversion des Kohlenmonoxids mit Wasserdampf in einer Gasmischung unter Anwesenheit anderer Gase auf dem Katalysator durch Änderung der Werte der Parameter des Prozesses, daß der Konversionsgrad des Kohlenmonoxids mit dem Wasserdampf möglichst hoch ist.

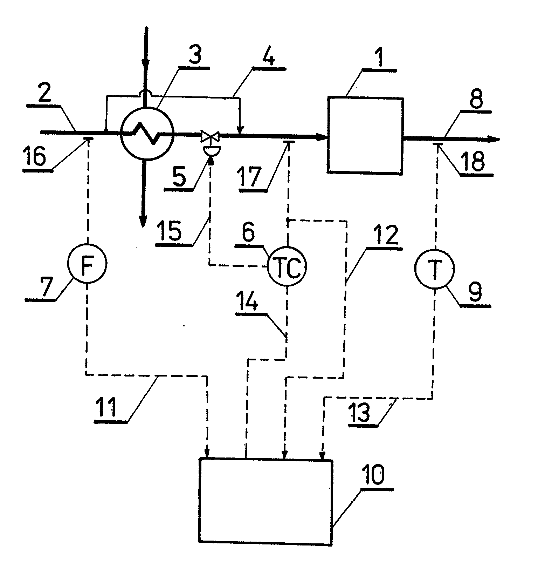

Ein Ausführungsbeispiel der Anordnung ist in der Zeichnung dargestellt.

In einem typischen Konverter, 1, der mit einem Katalysator gefüllt ist, erfolgt die Hauptkonversionsreaktion des Kohlenmonoxids mit dem Wasserdampf, die in einer durch die Leitung 2 zugeführten Gasmischung enthalten sind.

Das Gas strömt zunächst durch den Wärmetauscher 3 und umgeht diesen teilweise je nach der Lage des Regelventils 5 über die Leitung 4.

Die Lage des Ventils 5 wird durch den Temperaturregler 6 festgelegt. Der Durchsatz der Gasmischung wird durch den Durchflußmesser 7 gemessen.

Die Reaktionsabgase werden durch die Leitung 8 abgeführt. Die Temperatur der Reaktionsabgase wird durch das Temperaturmeßgerät 9 gemessen.

Die kennzeichnenden Parameter des Prozesses werden durch die Fühler 16, 17, 18 abgenommen, von welchen den entsprechenden Meßgeräten 7, 6 und 9 Signale zugeführt werden.

Der Optimalregler 10 nimmt von den Meßgeräten 7, 6 und 9 über die Leitungen 11, 12 und 13 die Werte des Durchsatzes der Gase und der Gastemperatur vor und hinter dem Konverter ab.

Das Steuerungsverfahren besteht nach dem Ausführungsbeispiel darin, daß in dem ersten Spiel die Rechenmaschine 10 die Werte der kennzeichnenden Parameter des Prozesses abliest, die durch die Leitungen 11, 12 und 13 aufgegeben werden.

Als solche Größen treten in dem Ausführungsbeispiel folgende auf:

$x_1$ - Temperatur des Gases vor dem Konverter 1, gemessen durch den Fühler 17, Temperaturregler 6 und aufgegeben durch die Leitung 12,

$x_2$ - Durchsatz des Gases, gemessen durch den Fühler 16, den Durchflußmesser 7 und aufgegeben durch die Leitung 11,

$x_3$ - Temperatur des Gases hinter dem Konverter, gemessen durch den Fühler 18, das Temperaturmeßgerät 9 und aufgegeben durch die Leitung 13.

Die Steuerungsqualitätskennziffer stellt in diesem Fall eine von den kennzeichnenden Größen des Prozesses abhängige Größe dar. Ihr Wert wird aus der Gleichung $y = x_2 \cdot (x_3 - x_1)$ ermittelt.

Die Steuerungsqualitätskennziffer ist proportional zu dem Wärmeeffekt der Reaktion, was bedeutet, daß die Optimierung des Prozesses auf der Maximierung des Konversionsgrades des Kohlenmonoxids beruht. Die Rechenmaschine bildet also eine Menge $Z = \{x_{1,i}, x_{2,i}, y_i\}$, bestehend aus $m$ Beobachtungen. Beim Ausführungsbeispiel werden gute Ergebnisse bereits für $m = 100$ erzielt. Im nächsten Arbeitsspiel führt die Rechenmaschine 10 Berechnungen aus, um $x_i = x_s$ zu finden, für welche die Funktion (1) ihren Maximalwert erreicht, welche in diesem Falle die folgende Form aufweist:

$$y(x_1, x_2) = \frac{\sum_{i=1}^{100} y_j h_j}{\sum_{i=1}^{100} h_i}$$

Im folgenden Steuerungsbeispiel wird der Berechnungswert $x_s$, d.h. der Wert der Gastemperatur am Einlauf in den Konverter,

- 9 -

durch die Leitung 14 dem Temperaturregler 6 als Sollwert
dieses Reglers zugeführt.

Der Temperaturregler 6 beeinflußt über die Leitung 15 das
Ventil 5 derart, daß die Temperatur des Gases vor dem Konverter, gemessen durch den Fühler 17, den Wert einnimmt,
der dem Meßwert $x_s$ gleich ist. Im folgenden Spiel liest
die Rechenmaschine 10 die kennzeichnenden Werte $x_1$, $x_2$,
$x_3$ ab, ermittelt den Wert $y$ und führt alle diese Werte in
die Beobachtungsmenge $Z$ ein, wobei aus dieser Menge die
älteste Beobachtung entfernt wird.

Die Anteile des Kohlenmonoxids und des Wasserdampfes in dem
durch die Leitung 2 aufgegebenen Gas werden in den der Konversion vorangehenden Prozessen festgelegt. Die Qualitätskennziffer ist eine Funktion des Durchsatzes des zu messenden und durch die Leitung 11 aufgegebenen Gases, der Temperatur des Gases vor dem Konverter, die durch die Leitung 12
gemessen und aufgegeben wird, sowie der Gastemperatur hinter
dem Konverter 1, die durch die Leitung 13 gemessen und aufgegeben wird.

Die Erfindung optimiert in dem Ausführungsbeispiel den Prozeß durch Maximierung des Konversionsgrades des Kohlenmonoxids, wodurch sein Anteil in den Konversionsabgasen minimiert wird.

Die beschriebene Anordnung und das erfindungsgemäße Steuerungsverfahren finden Anwendung in beliebigen Prozessen der
katalytischen Konversion des Kohlenmonoxids mit Wasserdampf
für eine Einzelanlage sowie für eine oder mehrere Fertigungsstraßen.

Die Erfindung kann zur optimalen Steuerung beliebiger chemischer oder physikalischer Prozesse angewandt werden, die in
einer beliebigen Herstellungsanlage verlaufen. Eine Voraussetzung des Einsatzes ist die Absonderung der meßbaren, den Prozeßverlauf kennzeichnend beeinflussenden Größen, Bestimmung einer meßbaren, oder eine Funktion von meßbaren Prozeßgrößen bildenden, Steuerungsqualitätskennziffer und der Werte der Steuerungsgrößen. Diese Größen werden dem Optimalregler zugeführt, welcher die optimalen Werte der Steuerungsgrößen bestimmt. Die Durchführung der Steuerung kann entweder automatisch oder von Hand erfolgen.

Patentansprüche

1. Verfahren zur Steuerung chemischer oder physikalischer Prozesse unter Messung der Prozeßparameter mittels Fühlern, Wandlern, Rechenmaschinen, sowie Ventilen und Reglern der gewählten Prozeßparameter, dadurch  g e k e n n - z e i c h n e t ,  daß die Steuerungsqualitätskennziffer ihren extremen Wert durch folgende zyklisch durchzuführende Funktionen erreicht:

- Einspeicherung von nacheinanderfolgenden Beobachtungen von kennzeichnend den Prozeßverlauf beeinflussenden Größen $x_{1,i} \ldots x_{n,i}$ und von Beobachtungen der Größe der Steuerungsqualitätskennziffer $y_i$ bei Zulassung von $y_i$ als von den kennzeichnend den Prozeßverlauf beeinflussenden Größen abhängiger Größe in einer Beobachtungsmenge, wobei

i - die Nummer der folgenden Beobachtung,

n - die Anzahl der kennzeichnend den Prozeßverlauf beeinflussenden Größen

sind,

- Ermittlung der optimalen Werte der Steuerungsgrößen $x_1 \ldots x_s$ als Werte, für welche die Funktion

$$y(x_1, \ldots x_n) = \frac{\displaystyle\sum_{i=1}^{m} y_i h_i}{\displaystyle\sum_{i=1}^{m} h_i}$$

ihren extremen Wert erreicht, wobei

- 12 -

m = Anzahl von Beobachtungen,

$$h_i = \exp\left\{-\left[\frac{(x_1 - x_{1,i})^2}{2\delta_1^2} + \ldots + \frac{(x_n - x_{n,i})^2}{2\delta_n^2}\right]\right\},$$

$\delta_1, \ldots, \delta_n$ - Parameter des Algorithmus,

a = Anzahl von Steuerungsgrößen, wobei $s \leq n$ ;
- Übermittlung der berechneten Werte $x_1, \ldots x_s$ als optimale Steuerungsgrößen zur Durchführung unmittelbar zur Regelschaltung oder zur Bedienung des Prozesses;
- der Einführung der nacheinanderfolgenden Beobachtungen und der Entfernung der Menge der ältesten Beobachtung in beliebiger Reihenfolge in die Beobachtungsmenge, sofern die Werte der beobachteten Größen im Moment wesentlich von den im vorangehenden Beobachtungsspiel erzielten Werten abweichen.

2. Verfahren nach Anspruch 1, dadurch g e k e n n z e i c h - n e t , daß die Beobachtungen die Ist-Werte und die für die Zeitperiode von 0,0001 bis 36 000 Sekunden ermittelten Mittelwerte dieser Größen darstellen, die den Prozeßverlauf und die Steuerungsqualitätskennziffer kennzeichnend beeinflussen.

3. Verfahren nach Anspruch 1, dadurch g e k e n n z e i c h - n e t , daß zur Ermittlung der Steuerungsqualitätskennziffer der Wärmeeffekt der Reaktion ermittelt wird.

4. Verfahren nach Anspruch 1, dadurch g e k e n n.z e i c h - n e t , daß zur Ermittlung der Steuerungsqualitätskennziffer die Verteilung der Parameter in den Prozeßanlagen sowie in der Prozeßapparatenstraße ermittelt wird.

5. Anordnung zur Steuerung chemischer oder physikalischer Prozesse, enthaltend Herstellungsanlagen, Regelventile, Regler, Fühler, Meßgeräte und Rechenmaschinen, dadurch g e k e n n z e i c h n e t , daß die Rechenmaschine einen gesonderten Speicherteil aufweist, der zur Einspeicherung einer Menge der Werte von mindestens fünfzehn nacheinanderfolgenden Beobachtungen und des Wertes der Prozeßqualitätskennziffer des in der Herstellungsanlage verlaufenden Prozesses vorgesehen ist, daß diesem Teil Größen von den Fühlern und Meßgeräten der den Prozeß kennzeichnenden Größen zugeführt werden und daß aus diesem Teil Steuerungsgrößen für die Regler, Regelventile und Anzeigegeräte herausgeführt werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 996 452 (SIEMENS) * Spalte 2, Zeile 32 - Spalte 8, Zeile 64; Figuren 1-7 * & DE - A - 2 440 346 | 1 | G 05 B 13/02 |
| A | US-A-3 346 726 (R. ROUXEL) * Insgesamt * & DE - A - 1 523 587 | 1 | |
| A | GB-A-1 347 168 (F. HECKERT) * Insgesamt * | 1 | |
| A | FR-A-2 246 904 (SIEMENS) * Seite 4, Zeile 15 - Seite 8, Zeile 33; Anspruch 1; Figuren 1,2 * | 1 | |

| RECHERCHIERTE SACHGEBIETE (Int. Cl. ³) |
|---|
| G 05 B 13/00 B 01 D 3/00 |

Der vorliegende Recherchenbericht wurde für alle Patentansprüche erstellt.

| Recherchenort | Abschlußdatum der Recherche | Prüfer |
|---|---|---|
| DEN HAAG | 23-09-1982 | ZAEGEL B.C. |